# EUROPÄISCHE PATENTSCHRIFT

(11) **EP 1 222 983 B1**
(45) Veröffentlichungstag und Bekanntmachung des Hinweises auf die Patenterteilung: **15.06.2005**
(21) Anmeldenummer: 02000372.9
(22) Anmeldetag: 25.04.1997
(51) Int. Cl.: B23B 29/034

(54) **Werkzeugkopf für den Einsatz in Werkzeugmaschinen**
Toolhead for use with a machine tool
Tête d'usinage pour l'utilisation avec une machine outil

(30) Priorität: 03.05.1996 DE 19617899
(43) Veröffentlichungstag der Anmeldung: 17.07.2002
(62) Teilanmeldung aus: 97921763.5
(73) Patentinhaber: KOMET GROUP Holding GmbH, 74354 Besigheim (DE)
(72) Erfinder: Scheer, Gerhard, 74369 Löchgau (DE); Feil, Erich, 74382 Neckarwestheim (DE); Hörl, Roland, 74357 Bönnigheim (DE)
(74) Vertreter: Wolf, Eckhard, Dr.-Ing.

(56) Entgegenhaltungen:
- DE-A- 2 158 717
- US-A- 2 460 092
- US-A- 4 741 230

## Beschreibung

Die Erfindung betrifft einen Werkzeugkopf für den Einsatz in Werkzeugmaschinen der im Oberbegriff des Anspruchs 1 angegebenen Gattung (DE-A-3526712).

Es ist ein Werkzeugkopf ähnlicher Art bekannt (DE-A-4330822), bei welchem der Verstellmotor mit seinem im wesentlichen zylindrischen Motorgehäuse in einer quer zur Grundkörperachse ausgerichteten, die Grundkörperachse schneidenden Querausnehmung des Grundkörpers mit parallel zur Querausnehmung ausgerichteter Abtriebswelle angeordnet ist. Für den Antrieb des Arbeitsschiebers sind Getriebemittel vorgesehen, die ein auf der Abtriebswelle des Motors angeordnetes Zahnrad, ein mit dem Zahnrad kämmendes Antriebsritzel und eine starr mit diesem verbundene Gewindespindel aufweisen. Auf der Gewindespindel ist ein Gleitstein mit einer Schrägverzahnung geführt, die mit einer komplementären Schrägverzahnung eines am Schieber angeordneten Gegenstücks kämmt. Die Getriebemittel sind dort außermittig im Grundkörper angeordnet. Auf der Seite des Werkzeugschaftes ist ein ringförmiges Spulengehäuse angeordnet, in welchem sich eine Sekundärspule mit zugehöriger Stabilisierungselektronik befindet, die Bestandteil einer induktiven Übertragungsstrecke einer Stromversorgungseinrichtung für den Verstellmotor und die im Werkzeugkopf enthaltenen Elektronikschaltungen ist. Grundsätzlich ist es möglich, die Induktionsstrecke auch zur bidirektionalen Datenübertragung zu verwenden, wobei die Datensignale dem Induktionsstrom aufmoduliert werden. Die Primärspule der induktiven Übertragungsstrecke befindet sich in einem maschinenseitigen Spulengehäuse, das radial außerhalb des Werkzeugschafts in den freien Zwischenraum zwischen der Stirnfläche der Maschinenspindel und der Stimfläche des werkzeugkopfseitigen Spulengehäuses eingreift. Die fliehkraftfreie Anordnung des Verstellmotors und des Getriebes im Werkzeugkopf ist bisher noch nicht befriedigend gelöst. Auch die Baugröße und die Montage-und Wartungsfreundlichkeit des bekannten Werkzeugkopfes lassen zu wünschen übrig.

Weiter ist es bei einem Plan- und Ausdrehkopf der eingangs angegebenen Art an sich bekannt (DE-A-3526712), daß die Getriebemittel eine konzentrisch zur Grundkörperachse drehbare Ausgangswelle aufweisen, die ein mit einer arbeitsschieberseitigen Verzahnung kämmendes Antriebsritzel trägt. Weiter ist dort ein im Grundkörper angeordneter Ausgleichsschieber vorgesehen, der über eine ausgleichsschieberseitige, mit dem Antriebsritzel kämmende Zahnplatte gegensinnig zum Arbeitsschieber verschiebbar ist.

Der Erfindung liegt die Aufgabe zugrunde, einen Werkzeugkopf der eingangs angegebenen Art zu entwickeln, dessen Getriebemittel in jeder Zwischenlage selbsthemmend sind und mit einfachen Mitteln spielfrei gestellt werden können.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht vor allem darin, daß die arbeitsschieberseitige Verzahnung an einem im Grundkörper linear geführten Zwischengetriebeelement angeordnet ist, das seinerseits über ein Keilgetriebe oder ein Zwischenzahnrad mit dem Arbeitsschieber gekuppelt ist. Das Keilgetriebe kann dabei durch an der Zahnplatte und am Arbeitsschieber angeordnete, zueinander komplementäre, ineinandergreifende Schrägverzahnungen gebildet sein. Mit diesen Maßnahmen wird eine Selbsthemmung und eine Spielfreistellung erreicht, die es ermöglicht, den Verstellmotor in jeder Antriebspause leistungsfrei zu stellen oder abzustellen.

Vorteilhafterweise ist der Arbeitsschieber in einer Linearführung geführt, während die Verzahnung durch eine mit dem Arbeitsritzel kämmende Zahnplatte oder Zahnstange gebildet ist. Um die internen Fliehkräfte auszugleichen, ist es von Vorteil, wenn zusätzlich ein im Grundkörper angeordneter Ausgleichsschieber vorgesehen ist, der über eine ausgleichsschieberfeste, mit dem Antriebsritzel kämmende Zahnplatte gegensinnig zum Arbeitsschieber verschiebbar ist. Zur Reduzierung der Baugröße ist es zweckmäßig, wenn der Ausgleichsschieber zumindest teilweise aus einem Schwermetall besteht. Andererseits kann zu diesem Zweck der Arbeitsschieber mindestens einen Hohlraum aufweisen, wobei es für den einseitigen Spielausgleich im Bereich des Arbeitsschiebers von Vorteil sein kann, wenn mindestens ein in Verschieberichtung im Abstand von der Werkzeugaufnahme angeordneter Hohlraum mit einem Schwermetall ausgefüllt ist. Da die Massenverteilung innerhalb des Werkzeugkopfes nur näherungsweise vorausberechnet werden kann, ist es für einen exakten Wuchtausgleich von Vorteil, wenn der Ausgleichsschieber ein abnehmbares oder austauschbares, vorzugsweise in seiner Masse durch Materialabtrag veränderbares Massenelement trägt.

Eine bevorzugte Ausgestaltung der Erfindung sieht vor, daß der Verstellmotor eine mit der getriebeseitigen Ausgangswelle fluchtende Abtriebswelle aufweist und daß die Getriebemittel als Untersetzungsgetriebe mit zueinander fluchtenden Ein- und Ausgangsachsen ausgebildet sind. Besonders einfach läßt sich dies verwirklichen, wenn das Untersetzungsgetriebe als Harmonic-Drive-Getriebe oder als Planetengetriebe ausgebildet ist. Um dazuhin eine besonders kompakte Bauweise zu erzielen, wird gemäß einer weiteren vorteilhaften Ausgestaltung der Erfindung vorgeschlagen, daß der Verstellmotor und die Getriebemittel zumindest teilweise radial und axial ineinandergeschachtelt angeordnet sind. Dies kann entweder dadurch erfolgen, daß der Verstellmotor oder dessen Antriebswelle einen zentralen Durchbruch zur Aufnahme der Getriebemittel aufweist oder daß die Getriebemittel einen zentralen Durchbruch zur Aufnahme des Verstellmotors aufweisen.

Um bei geringer Reibung eine hohe Stellgenauigkeit zu erzielen, ist es von Vorteil, wenn der Arbeitsschieber in einer grundkörperfesten, spielfrei gestellten, vorzugsweise prismenförmigen Wälzführung geführt ist. Da die Wälzführung durch die angreifenden Schneidkräfte trotz Vorspannung einer Momentenbelastung und Biegeverformung unterworfen ist, ist es vorteilhaft, wenn die Wälzführung in ihrer elastischen Verformbarkeit begrenzt ist und wenn zusätzlich eine bei Erreichen der elastischen Verformungsgrenze wirksam werdende Gleitführung für den Arbeitsschieber vorgesehen ist. Dadurch wird einmal eine Verbesserung des Dämpfungsverhaltens auch bei hohen Belastungsspitzen erzielt. Zum anderen wird gewährleistet, daß sich an den Führungsrollen und am Schieber keine bleibenden Verformungen bilden können.

Grundsätzlich ist es möglich, auch den Ausgleichsschieber in einer grundkörperfesten Wälzführung anzuordnen.

Zur Erhöhung der Verstellgenauigkeit ist es von Vorteil, wenn der Arbeitsschieber und das Antriebsritzel in ihrer Wirkverbindung spielfrei gestellt werden. Um dies zu erreichen, wird gemäß der Erfindung vorgeschlagen, daß die arbeitsschieberseitige Zahnplatte oder das Ritzel in zwei axial getrennte, relativ zueinander verschieb- oder verdrehbare und starr miteinander verbindbare Verzahnungsteile unterteilt ist.

Um eine hohe Montage- und Wartungsfreundlichkeit zu erzielen, wird gemäß einer bevorzugten Ausgestaltung der Erfindung vorgeschlagen, daß der Grundkörper in eine Schieberbaugruppe zur Aufnahme des Arbeitsschiebers und gegebenenfalls des Ausgleichsschiebers, eine Antriebsbaugruppe zur Aufnahme des Verstellmotors und der Getriebemittel und eine den Werkzeugschaft aufweisende Anschlußbaugruppe unterteilt ist, die an axialen Trennstellen lösbar miteinander verbunden sind. Die Schieberbaugruppe enthält dabei zweckmäßig eine Meßeinrichtung zur direkten Messung des Verstellwegs des Antriebsschiebers relativ zum Grundkörper. Weiter ist in der Schieberbaugruppe und/oder der Antriebsbaugruppe eine mit der Meßeinrichtung verbundene Meß- und Regelelektronik zur Ansteuerung des Verstellmotors angeordnet. In der Anschlußbaugruppe befindet sich eine Schnittstelle für eine induktive Stromversorgung oder Datenübertragung, während zusätzlich im Grundkörper, vorzugsweise im Bereich der Schieberbaugruppe eine Schnittstelle für eine galvanische Stromversorgung und Datenübertragung angeordnet sein kann.

Eine bevorzugte Ausgestaltung der Erfindung sieht vor, daß der Arbeits- und der Ausgleichsschieber unter Bildung eines Freiraums in axialem Abstand voneinander angeordnet sind und daß die Zahnplatten des Arbeitsschiebers und des Ausgleichsschiebers sowie das am freien Ende der Ausgangswelle angeordnete Antriebsritzel in den Freiraum eingreifen. Um dies zu ermöglichen, weist der Ausgleichsschieber zweckmäßig ein Langloch für den Durchgriff der Ausgangswelle auf. Um die am Antriebsritzel angreifenden Kräfte ohne Einbuße an Verstellgenauigkeit auf den Grundkörper übertragen zu können, ist es dabei vorteilhaft, wenn die Antriebsbaugruppe mit einer axial überstehenden Lagerhülse für die Ausgangswelle in eine axial offene Ausnehmung der Schieberbaugruppe eingreift. Die Lagerhülse greift dabei zweckmäßig durch das Langloch des Ausgleichsschiebers hindurch.

Eine weitere bevorzugte Ausgestaltung der Erfindung sieht vor, daß der Verstellmotor mit seinem rotationssymmetrischen Motorgehäuse in einer zur Grundkörperachse konzentrischen Ausnehmung des Grundkörpers angeordnet ist, die einen durch das Motorgehäuse begrenzten, flüssigkeitsdichten, mit einem Kühlmittelstrom beaufschlagbaren Spaltraum für die Motorkühlung enthalten kann. Der den Spaltraum enthaltenden Teil der Ausnehmung ist zweckmäßig in der Anschlußbaugruppe angeordnet. Da auch im Bereich der Stromversorgungs- und Datenübertragungsschnittstelle thermische Energie abgeführt werden muß, ist es von Vorteil, wenn die Stromversorgungs- und Datenübertragungsschnittstelle in einem außenseitig breitflächig mit einem Kühlmittelstrom beaufschlagbaren Gehäuseteil der Anschlußbaugruppe angeordnet ist.

Zur Versorgung der Werkzeugaufnahme mit einem Kühlschmiermittel kann der Arbeitsschieber mit einer mit der Werkzeugaufnahme kommunizierenden, parallel zur Verstellrichtung des Arbeitsschiebers ausgerichteten Radialbohrung für den Anschluß an eine grundkörperfeste Kühlschmiermittelleitung versehen werden. Die grundkörperfeste Kühlschmiermittelleitung weist zu diesem Zweck ein in die Radialbohrung gleitend und flüssigkeitsdicht eingreifendes Steckrohr auf.

Um die Schieberbaugruppe gegen Schmutz- und Kühlschmiermittelzutritt abzudichten, weist sie ein über ein Deckelteil mit dem Grundkörper dreh-und verschiebefest verspanntes Mantelrohr auf.

Der erfindungsgemäße Werkzeugkopf wird mit Vorteil als Plandrehkopf oder Ausdrehkopf eingesetzt.

Im folgenden wird die Erfindung anhand der Zeichnung näher erläutert. Es zeigen
- Fig. 1: eine Seitenansicht eines als Plandrehkopf ausgebildeten Werkzeugkopfs;
- Fig. 2: eine Draufsicht auf den Werkzeugkopf nach Fig. 1;
- Fig. 3: einen Schnitt entlang der Schnittlinie III-III der Fig. 2;
- Fig. 4: einen Schnitt entlang der Schnittlinie IV-IV der Fig. 2;
- Fig. 5: einen Schnitt entlang der Schnittlinie V-V der Fig. 4;
- Fig. 6: eine Draufsicht auf die Antriebsbaugruppe des Werkzeugkopfs bei abgenommener Schieberbaugruppe;
- Fig. 7: eine Draufsicht auf ein abgewandeltes Ausführungsbeispiel eines Plandrehkopfs mit zwischen Antriebsritzel und Arbeitsschieber angeordnetem, als Keilgetriebe ausgebildetem Zwischengetriebeelement.

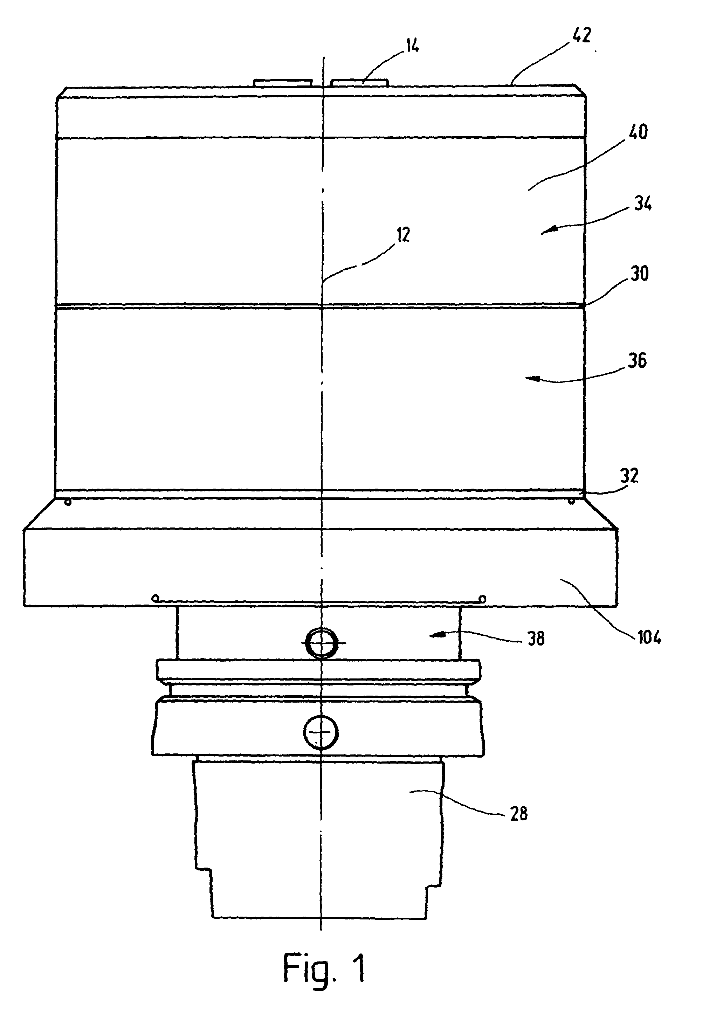

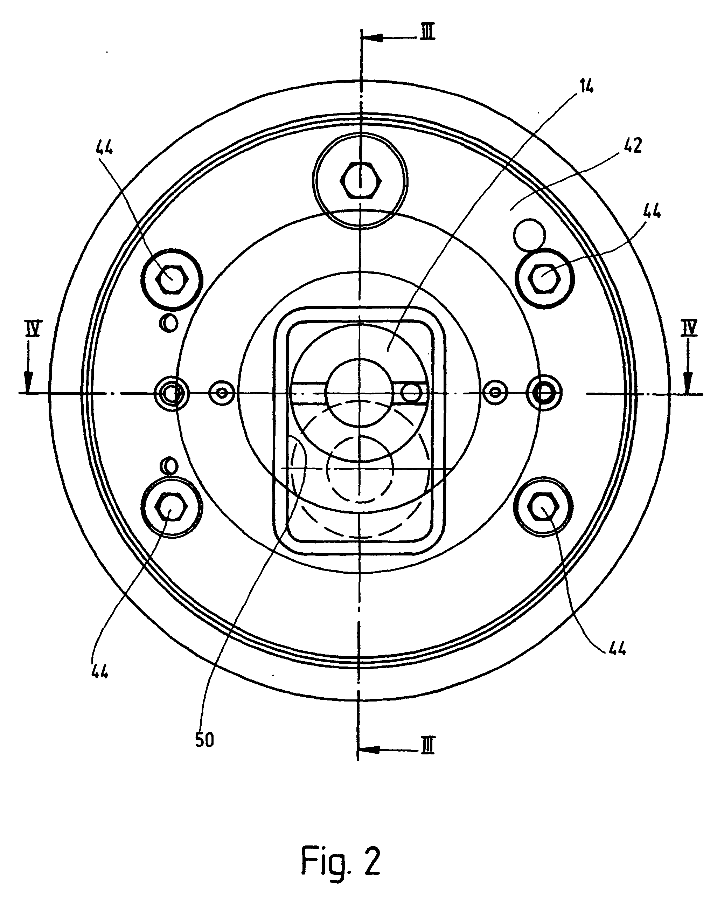

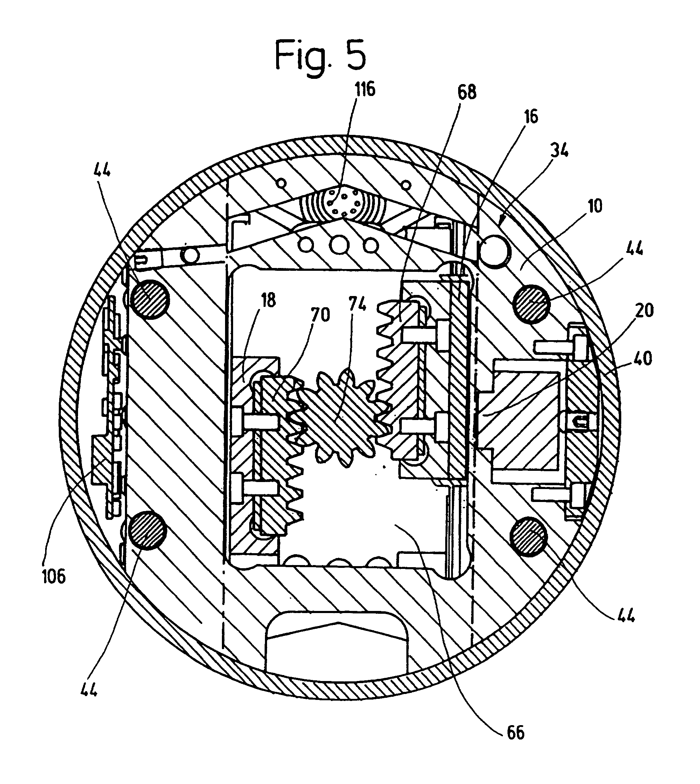

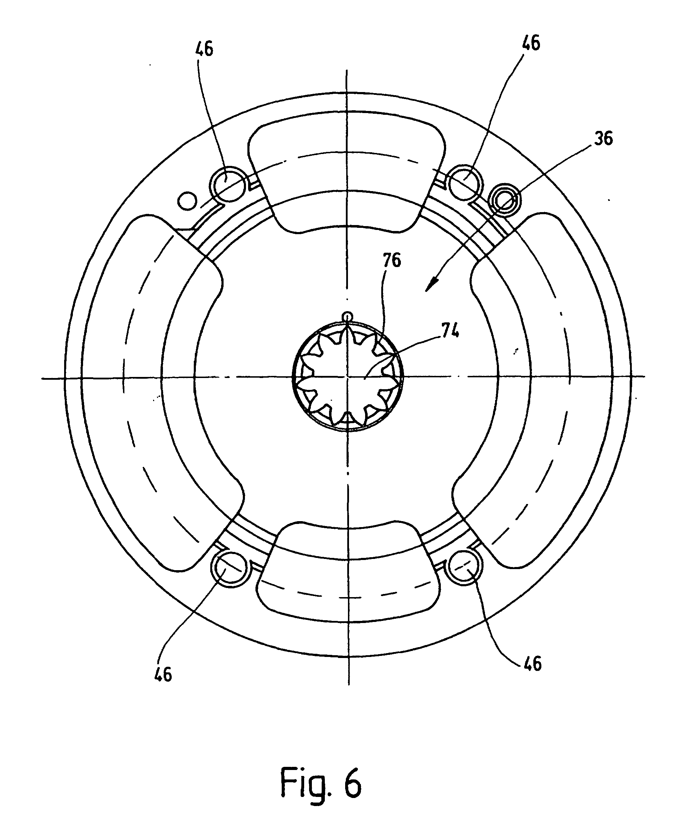

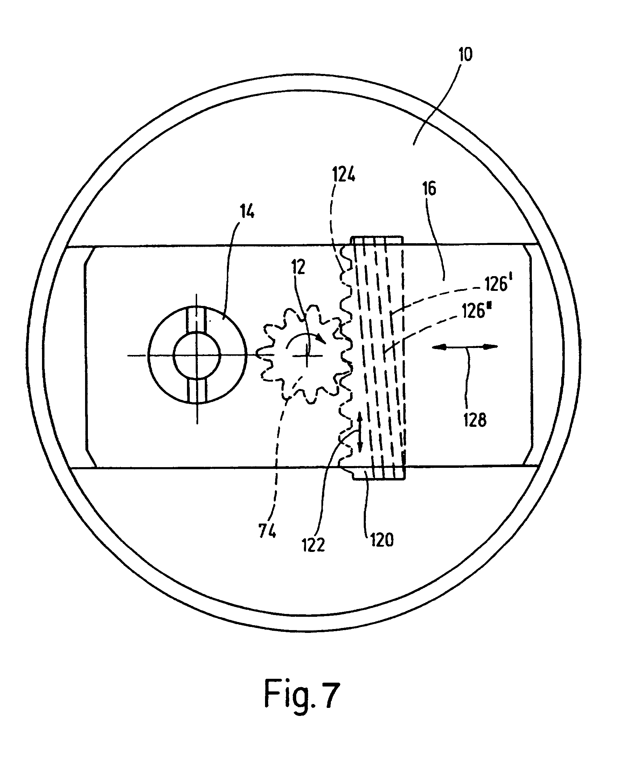

Der in der Zeichnung dargestellte Werkzeugkopf ist als Plandrehkopf für den Einsatz in Werkzeugmaschinen bestimmt. Die Fig. 1 bis 6 dienen vor allem zur detaillierten Erläuterung des inneren Aufbaus des Werkzeugkopfes mit Antriebs- und Getriebemitteln bis zum Antriebsritzel. Der Antriebsmechanismus des Arbeitsschiebers ist in den Fig. 1 bis 6 vereinfacht dargestellt. Die erfindungsgemäße Ausführungsform unter Verwendung eines Zwischengetriebeelements 120 wird nachfolgend im Rahmen der Fig. 7 erläutert.

Der Werkzeugkopf besteht im wesentlichen aus einem um eine Drehachse 12 drehbaren Grundkörper 10, einem im Grundkörper 10 quer zur Drehachse 12 verschiebbaren, eine Werkzeugaufnahme 14 für ein Schneidwerkzeug tragenden Arbeitsschieber 16, einem in entgegengesetzter Richtung des Arbeitsschiebers 16 im Grundkörper 10 verschiebbaren Ausgleichsschieber 18, einer Meßeinrichtung 20 zur direkten Verstellwegmessung des Arbeitsschiebers 16 relativ zum Grundkörper 10, einem unter Zwischenschaltung eines Untersetzungsgetriebes 22 auf den Arbeitsschieber 16 und den Ausgleichsschieber 18 einwirkenden elektrischen Verstellmotor 24, einer Stromversorgungseinrichtung 26 und einem axial über den Grundkörper 10 überstehenden Werkzeugschaft 28, der mit einer nicht dargestellten Maschinenspindel einer Werkzeugmaschine kuppelbar ist.

Der Werkzeugkopf ist aus drei an axialen Trennstellen 30,32 lösbar miteinander verbindbaren Baugruppen zusammengesetzt, einer den Arbeitsschieber 16 und den Ausgleichsschieber 18 aufnehmenden Schieberbaugruppe 34, einer den Verstellmotor 24 und das Untersetzungsgetriebe 22 enthaltenden Antriebsbaugruppe 36 und einer den Werkzeugschaft 28 und die Stromversorgungseinrichtung 26 enthaltenden Anschlußbaugruppe 38. Die Schieberbaugruppe 34 wird an ihrem Umfang von einem Mantelrohr 40 aus Metall oder Kunststoff umfaßt und stirnseitig durch ein Deckelteil 42 verschlossen. Die Verbindung der Schieberbaugruppe 34 und der Antriebsbaugruppe 36 erfolgt mit Hilfe der achsparallelen Schrauben 44, die durch das Deckelteil 42 und nicht dargestellte Durchgangsöffnungen der Schieberbaugruppe 34 hindurch in Gewindebohrungen 46 der Antriebsbaugruppe 36 eingedreht sind. Die Anschlußbaugruppe 38 ist von der anderen Stirnseite her mittels Schrauben 48 an der Antriebsbaugruppe 36 angeschraubt.

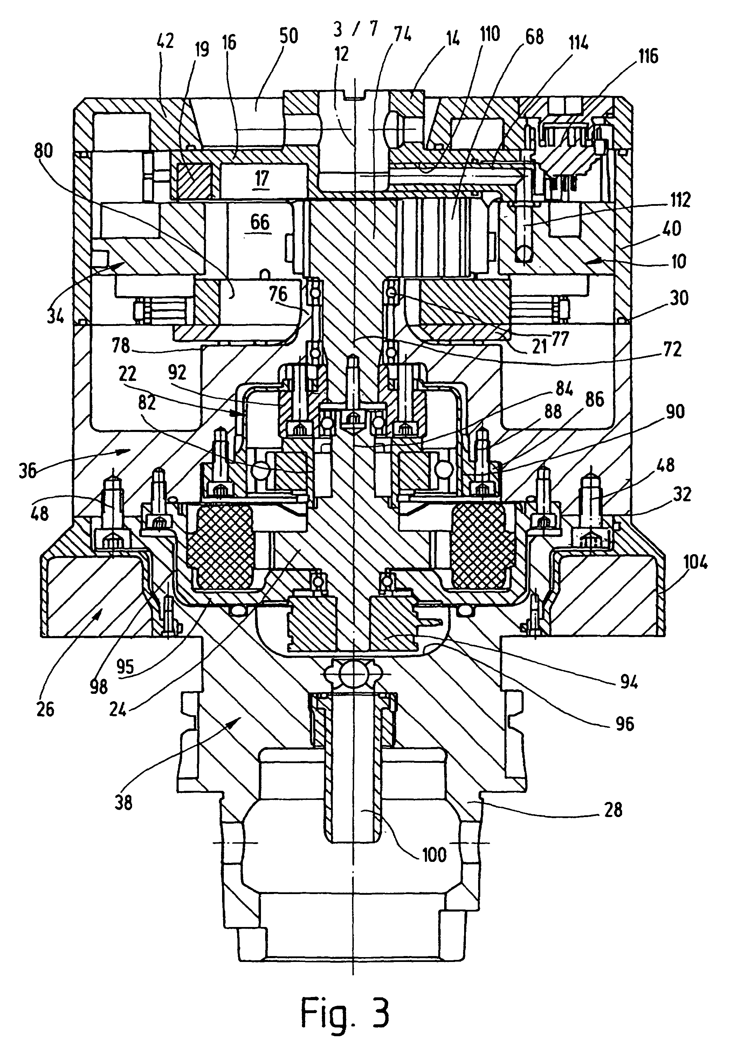

Der mit der Werkzeugaufnahme 14 durch ein Langloch 50 des Deckelteils 42 hindurchgreifende Arbeitsschieber 16 ist in einer grundkörperfesten prismenförmigen Wälzführung 52 in Verschieberichtung geführt. Die Wälzführung ist dabei mittels nicht dargestellter, gegen die grundkörperfesten Führungsprismen 54 andrückender Klemmkeile spielfrei gestellt. Da die Wälzführung 52 bei hohen Schneidkräften über die Werkzeugaufnahme 14 einer Momentenbelastung ausgesetzt ist, die zu einer Biegeverformung führen kann, ist zusätzlich eine bei Erreichen der elastischen Verformungsgrenze wirksam werdende Gleitführung 56 für den Arbeitsschieber 16 vorgesehen. Im unbelasteten Zustand bildet sich vor der Gleitführung 56 ein Freiraum 58 aus, in den hinein sich das arbeitsschieberfeste Führungsprisma 54 im Belastungszustand bis zur Anlage gegen das Gleitlager 56 elastisch verbiegen kann. Dies sorgt dafür, daß bei schwerer Zerspanung das Werkzeug über die Gleitführung 56 gedämpft und dadurch ein Rattern oder Vibrieren vermieden wird. Der Arbeitsschieber ist auf seiner einen Breitseite mit Hohlräumen 17 versehen. Aus Fig. 3 ist zu ersehen, daß der in größtem Abstand von der Werkzeugaufnahme 14 in Verschieberichtung angeordnete Hohlraum mit einem Schwermetall 19 ausgefüllt.

Der vorzugsweise aus einem Schwermetall bestehende Ausgleichsschieber 18 ist ebenfalls in einer grundkörperfesten Wälzführung 60, die nicht spielfrei gestellt sein muß, geführt. Auf seiner einen Breitseite ist der Ausgleichsschieber 18 mit einem abnehmbaren oder austauschbaren plattenförmigen Massenelement 21 bestückt, das für den Wuchtausgleich in seiner Masse durch Materialabtrag veränderbar ist.

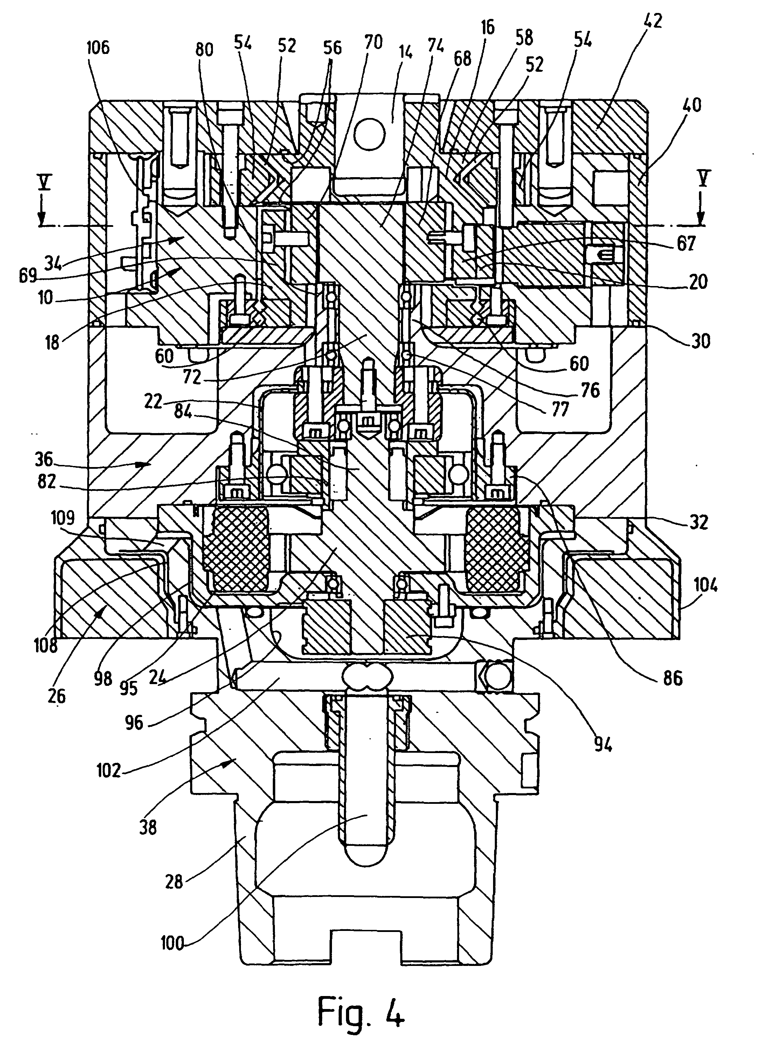

Der Arbeitsschieber 16 und der Ausgleichsschieber 18 sind in axialem Abstand voneinander angeordnet. Wie insbesondere aus Fig. 4 zu ersehen ist, weisen sie ein im wesentlichen L-förmiges Profil auf, wobei an den jeweils kurzen, in den Freiraum 66 eingreifenden Schenkeln 67,69 Zahnplatten 68,70 angeordnet sind, die mit einem auf der zur Drehachse 12 koaxialen Ausgangswelle 72 des Untersetzungsgetriebes 22 angeordneten Antriebsritzel 74 kämmen. Auf diese Weise werden der Arbeitsschieber 16 und der Ausgleichsschieber 18 bei drehendem Antriebsritzel 74 gegensinnig verschoben.

Die Ausgangswelle 72 ist in einer axial über die Antriebsbaugruppe 36 überstehenden Lagerhülse 76 mittels zweier Kugellager 77 gelagert. Sie greift zusammen mit der Lagerhülse durch eine Öffnung 78 in der Schieberbaugruppe 34 und durch ein Langloch 80 im Ausgleichsschieber 18 von der Seite der Antriebsbaugruppe 36 her ein.

Bei dem Untersetzungsgetriebe 22 handelt es sich um ein Harmonic-Drive-Getriebe, dessen ovale Antriebsscheibe 82 mit der zur Drehachse 12 koaxialen Abtriebswelle 84 des Verstellmotors 24 gekuppelt ist, dessen innenverzahnter Ring 86 mit Hilfe der Schrauben 88 mit dem Grundkörper 10 im Bereich der Antriebsbaugruppe 36 drehfest verbunden ist und dessen flexible außenverzahnte Hülse 90 über das Kupplungsstück 92 mit der Ausgangswelle 72 gekuppelt ist.

Der in Fig. 3 und 4 vereinfacht dargestellte, mit einem Drehgeber 94 bestückte Verstellmotor 24 steht mit seinem Motorgehäuse 95 über die Antriebsbaugruppe 36 axial über und greift dort in eine zur Drehachse 12 konzentrische topfartige Ausnehmung 96 der Anschlußbaugruppe 38 unter Freilassung eines Spaltraums 98 ein. Der Spaltraum 98 kommuniziert mit den Kanälen 100,102 der Anschlußbaugruppe 38 und ist über diese von der Werkzeugmaschine her mit einem Kühlmittel beaufschlagbar. Auf diese Weise kann die beim Betrieb des Verstellmotors anfallende Abwärme abgeführt werden.

Die Stromversorgungseinrichtung 26 weist ein an der Anschlußbaugruppe 38 angeordnetes Spulengehäuse 104 auf, in dem sich eine in einer mechanisch belastbaren Gußmasse aus Kunststoff oder Kunstharz eingebettete Sekundärspule mit zugehöriger Stabilisierungselektronik befindet.

Die Sekundärspule ist Bestandteil einer induktiven Übertragungsstrecke der Stromversorgungseinrichtung 26, die für die Stromversorgung des Verstellmotors 24 und der im Werkzeugkopf enthaltenen Elektronikschaltungen 106 sorgt. Weiter dient die Induktionsstrecke zur bidirektionalen Datenübertragung, wobei die Datensignale dem Induktionsstrom aufmoduliert werden. Die nicht dargestellte Primärspule der Stromversorgungseinrichtung 26 ist in einem maschinenseitigen Spulengehäuse angeordnet, das radial außerhalb des Werkzeugschaftes 28 in einen freien Zwischenraum zwischen der Stimfläche einer Maschinenspindel und der Stirnfläche des werkzeugkopfseitigen Spulengehäuses 104 eingreift. Auf der Außenseite des Spulengehäuses 104 befindet sich ein Spaltraum 108, der über Kanäle 109 mit dem motorseitigen Spaltraum 98 kommuniziert und dadurch mit Kühlmittel beaufschlagbar ist. Auf diese Weise kann die in der Sekundärspule der Stromversorgungseinrichtung 26 entstehende Abwärme nach außen abgeführt werden.

Ein Teil des über die Kanäle 100,102 zugeführten Kühlschmiermittels wird innerhalb des Grundkörpers 10 der Werkzeugaufnahme 14 und über diese dem nicht dargestellten Schneidenträger zugeführt. Zu diesem Zweck weist der Arbeitsschieber 16 eine parallel zu seiner Verschieberichtung ausgerichtete, bis zur Werkzeugaufnahme 14 reichende Radialbohrung 110 auf, in die ein mit den grundkörperseitigen Kühlmittelkanälen 112 kommunizierendes Steckrohr 114 gleitend und flüssigkeitsdicht eingreift.

Im Bereich der Schieberbaugruppe befindet sich zusätzlich eine Schnittstelle mit einer Steckerbuchse 116 für die galvanische Stromversorgung und Datenübertragung.

Das in Fig. 7 in einer Draufsicht dargestellte erfindungsgemäße Ausführungsbeispiel eines Plandrehkopfs unterscheidet sich von dem Ausführungsbeispiel nach Fig. 1 bis 6 dadurch, daß zwischen dem Antriebsritzel 74 und dem als Linearschieber ausgebildeten Arbeitsschieber 16 ein Zwischengetriebeelement 120 angeordnet ist, das in Richtung des Doppelpfeils 122 linear im Werkzeugkopf geführt ist, eine mit dem Ritzel 74 kämmende Linearverzahnung 124 sowie eine zum Arbeitsschieber 16 weisense Schrägverzahnung 126' aufweist, die mit einer komplementären Schrägverzahnung 126" im Sinne eines Keilgetriebes zusammenwirkt, so daß der Arbeitsschieber unter radialer Verstellung der Werkzeugaufnahme 14 in Richtung des Doppelpfeils 118 verschoben wird. Die Schrägverzahnung 126',126" führt zu einer zusätzlichen Untersetzung des Verschiebewegs des Arbeitsschiebers 16 und zu einer Selbsthemmung in jeder Zwischenlage. Die Schrägverzahnung 126',126" kann außerdem mit einfachen Mitteln spielfrei gestellt werden.

Zusammenfassend ist folgendes festzuhalten: Die Erfindung bezieht sich auf einen Werkzeugkopf für den Einsatz in Werkzeugmaschinen. Der Werkzeugkopf weist einen Grundkörper 10, einen axial über den Grundkörper 10 überstehenden, mit einer Maschinenspindel kuppelbaren Werkzeugschaft 28, mindestens einen im wesentlichen quer zur Grundkörperachse verstellbaren, eine stimseitig überstehende Werkzeugaufnahme 14 aufweisenden Arbeitsschieber 16 und einen im Grundkörper angeordneten, über Getriebemittel 22 in Verstellrichtung auf den Arbeitsschieber einwirkenden Verstellmotor 24 auf. Die Getriebemittel weisen eine konzentrisch zur Grundkörperachse 12 drehbare Ausgangswelle 72 auf, die ein mit einer arbeitsschieberseitigen Verzahnung 124 kämmendes Antriebsritzel 74 trägt. Damit die Getriebemittel in jeder Zwischenlage selbsthemmend sind und mit einfachen Mitteln spielfrei gestellt werden können, wird gemäß der Erfindung vorgeschlagen, daß die arbeitsschieberseitige Verzahnung 124 an einem im Grundkörper 10 linear geführten Zwischengetriebeelement 120 angeordnet ist, das seinerseits über ein Keilgetriebe 126',126" oder ein Zwischenzahnrad mit dem Arbeitsschieber 16 gekuppelt ist.

## Patentansprüche

1. Werkzeugkopf für den Einsatz in Werkzeugmaschinen, mit einem Grundkörper (10), mit einem axial über den Grundkörper (10) überstehenden, mit einer Maschinenspindel kuppelbaren Werkzeugschaft (28), mit mindestens einem im wesentlichen quer zur Grundkörperachse (12) verstellbaren, eine stirnseitige Werkzeugaufnahme (14) aufweisenden Arbeitsschieber (16) und mit einem im Grundkörper (10) angeordneten, über Getriebemittel (22) in Verstellrichtung auf den Arbeitsschieber (16) einwirkenden Verstellmotor (24), wobei die Getriebemittel eine konzentrisch zur Grundkörperachse (12) drehbare Ausgangswelle (72) aufweisen, die ein mit einer arbeitsschieberseitigen Verzahnung (124) kämmendes Antriebsritzel (74) trägt, **dadurch gekennzeichnet, daß** die arbeitsschieberseitige Verzahnung (124) an einem im Grundkörper (10) linear geführten Zwischengetriebeelement (120) angeordnet ist, das seinerseits über ein Keilgetriebe (126',126") oder ein Zwischenzahnrad mit dem Arbeitsschieber (16) gekuppelt ist.

2. Werkzeugkopf nach Anspruch 1, **dadurch gekennzeichnet, daß** das Keilgetriebe durch an dem Zwischengetriebeelement (120) und am Arbeitsschieber (16) angeordnete, zueinander komplementäre, ineinandergreifende Schrägverzahnungen (126',126") gebildet ist.

3. Werkzeugkopf nach Anspruch 1 oder 2, **dadurch gekennzeichnet, daß** der Arbeitsschieber (16) in einer grundkörperfesten Linearführung geführt ist, während die Verzahnung (124) durch eine mit dem Antriebsritzel (74) kämmende Zahnplatte oder Zahnstange gebildet ist.

4. Werkzeugkopf nach einem der Ansprüche 1 bis 3, **gekennzeichnet durch** einen im Grundkörper (10) angeordneten Ausgleichsschieber (18), der über eine ausgleichsschieberseitige mit dem Antriebsritzel (74) kämmende Zahnplatte gegensinnig zum Arbeitsschieber (16) verschiebbar ist.

5. Werkzeugkopf nach Anspruch 4, **dadurch gekennzeichnet, daß** der Ausgleichsschieber zumindest teilweise aus einem Schwermetall besteht.

6. Werkzeugkopf nach einem der Ansprüche 1 bis 5, **dadurch gekennzeichnet, daß** der Arbeitsschieber (16) mindestens einen Hohlraum (17,19) aufweist.

7. Werkzeugkopf nach Anspruch 6, **dadurch gekennzeichnet, daß** mindestens ein in Verschieberichtung im Abstand von der Werkzeugaufnahme (14) angeordneter Hohlraum mit einem Schwermetall (19) ausgefüllt ist.

8. Werkzeugkopf nach einem der Ansprüche 4 bis 7, **dadurch gekennzeichnet, daß** der Ausgleichsschieber (18) ein abnehmbares oder austauschbares, vorzugsweise in seiner Masse durch Materialabtrag veränderbares Massenelement (21) trägt.

9. Werkzeugkopf nach einem der Ansprüche 1 bis 8, **dadurch gekennzeichnet, daß** die Getriebemittel ein Untersetzungsgetriebe (22) mit zueinander fluchtenden Ein- und Ausgangsachsen aufweisen, wobei das Untersetzungsgetriebe (22) als Harmonic-Drive-Getriebe oder als Planetengetriebe ausgebildet ist.

10. Werkzeugkopf nach Anspruch 9, **dadurch gekennzeichnet, daß** der Verstellmotor (24) und das Untersetzungsgetriebe (22) zumindest teilweise radial und axial ineinandergeschachtelt angeordnet sind.

11. Werkzeugkopf nach Anspruch 10, **dadurch gekennzeichnet, daß** der Verstellmotor (24) oder dessen Abtriebswelle (84) einen zentralen Durchbruch zur Aufnahme des Untersetzungsgetriebes (22) aufweist.

12. Werkzeugkopf nach Anspruch 10, **dadurch gekennzeichnet, daß** das Untersetzungsgetriebe (22) einen zentralen Durchbruch zur Aufnahme des Verstellmotors (24) aufweist.

13. Werkzeugkopf nach einem der Ansprüche 1 bis 12, **dadurch gekennzeichnet, daß** der Arbeitsschieber (16) in einer grundkörperfesten, spielfrei gestellten, vorzugsweise prismenförmigen Wälzführung (52,54,58) geführt ist, daß die Wälzführung begrenzt elastisch verformbar ist und daß zusätzlich eine bei Erreichen der elastischen Verformungsgrenze wirksam werdende Gleitführung (56) für den Arbeitsschieber (16) vorgesehen ist.

14. Werkzeugkopf nach einem der Ansprüche 4 bis 13, **dadurch gekennzeichnet, daß** der Ausgleichsschieber (18) in einer grundkörperfesten Wälzführung (60) geführt ist.

15. Werkzeugkopf nach einem der Ansprüche 1 bis 14, **gekennzeichnet durch** eine Schieberbaugruppe (34) zur Aufnahme des Arbeitsschiebers und gegebenenfalls des Ausgleichsschiebers, eine Antriebsbaugruppe (36) zur Aufnahme des Verstellmotors (24) und der Getriebemittel (22) und eine den Werkzeugschaft aufweisende Anschlußbaugruppe (38), die an axialen Trennstellen (30,32) lösbar miteinander verbunden sind.

16. Werkzeugkopf nach Anspruch 15, **dadurch gekennzeichnet, daß** die Schieberbaugruppe (34) eine Meßeinrichtung (20) zur direkten Messung des Verstellwegs des Arbeitsschiebers (16) relativ zum Grundkörper (10) enthält.

17. Werkzeugkopf nach Anspruch 16, **dadurch gekennzeichnet, daß** die Schieberbaugruppe und/oder die Antriebsbaugruppe eine mit der Meßeinrichtung (20) verbundene Meß- und Regelelektronik (106) zur Ansteuerung des Verstellmotors (24) enthält.

18. Werkzeugkopf nach einem der Ansprüche 15 bis 17, **dadurch gekennzeichnet, daß** die Anschlußbaugruppe (38) eine Schnittstelle (26,104) für eine induktive Stromversorgung und Datenübertragung enthält.

19. Werkzeugkopf nach einem der Ansprüche 1 bis 18, **dadurch gekennzeichnet, daß** der Verstellmotor (24) mit seinem rotationssymmetrischen Motorgehäuse (95) in einer zur Grundkörperachse konzentrischen Ausnehmung (96) des Grundkörpers unter Freilassung eines mit einem Kühlmittel beaufschlagbaren Spaltraums (98) für die Motorkühlung angeordnet ist.

20. Werkzeugkopf nach Anspruch 19, **dadurch gekennzeichnet, daß** der den Spaltraum (98) enthaltende Teil der Ausnehmung (96) in einer Anschlußbaugruppe (38) angeordnet ist.

21. Werkzeugkopf nach einem der Ansprüche 18 bis 20, **dadurch gekennzeichnet, daß** die Stromversorgungsschnittstelle (26,104) in einem außenseitig über einen Spaltraum (108) mit einem Kühlmittel beaufschlagbaren Gehäuse (104) angeordnet ist.

22. Werkzeugkopf nach einem der Ansprüche 15 bis 21, **dadurch gekennzeichnet, daß** die Antriebsbaugruppe (36) mit einer axial überstehenden Lagerhülse (76) für die Ausgangswelle (72) in eine axial offene Ausnehmung (78) der Schieberbaugruppe (34) eingreift.

23. Werkzeugkopf nach Anspruch 22, **dadurch gekennzeichnet, daß** die Lagerhülse (76) in ein Langloch (80) des Ausgleichsschiebers (18) eingreift.

24. Werkzeugkopf nach einem der Ansprüche 1 bis 23, **dadurch gekennzeichnet, daß** die arbeitsschieberseitige Zahnplatte (68) oder das Antriebsritzel (74) in zwei axial getrennte, relativ zueinander verschieboder verdrehbare und starr miteinander verbindbare Verzahnungsteile unterteilt sind.

25. Werkzeugkopf nach einem der Ansprüche 1 bis 24, **dadurch gekennzeichnet, daß** der Arbeitsschieber (16) eine mit der Werkzeugaufnahme (14) kommunizierende, parallel zur Verstellrichtung ausgerichtete Radialbohrung (110) für den Anschluß an eine grundkörperfeste Kühlmittelleitung (112) aufweist.

26. Werkzeugkopf nach Anspruch 25, **dadurch gekennzeichnet, daß** die grundkörperfeste Kühlmittelleitung (112) ein in die Radialbohrung (110) gleitend und flüssigkeitsdicht eingreifendes Steckrohr (114) aufweist.

27. Werkzeugkopf nach einem der Ansprüche 15 bis 26, **dadurch gekennzeichnet, daß** die Schieberbaugruppe ein über ein Deckelteil (42) mit dem Grundkörper (10) dreh- und verschiebefest verspanntes Mantelrohr (40) aufweist.

28. Werkzeugkopf nach einem der Ansprüche 15 bis 27, **dadurch gekennzeichnet, daß** der Grundkörper (10) vorzugsweise im Bereich der Schieberbaugruppe (34) eine Schnittstelle (116) für eine galvanische Stromversorgung und Datenübertragung aufweist.

## Claims

1. A tool head for use in machine tools, comprising a base body (10), a tool shank (28) which is adapted to be coupled to a machine spindle and which protrudes axially over the base body (10), at least one working slide (16) which is adapted to be displaced essentially transversely with respect to a base body axis (12) and which has a tool holding fixture (14) at its front face, and an adjusting motor (24) which is disposed in the base body (10) and which acts upon the working slide (16) in the direction of displacement by means of transmission means (22), wherein the transmission means comprise an output shaft (72) which is adapted to be rotated concentrically with respect to the base body axis (12), which output shaft carries a drive sprocket (74) which meshes with toothing (124) on the side of the working slide, **characterized in that** the toothing (124) on the side of the working slide is disposed on an intermediate transmission element (120) which is linearly guided in the base body and which in turn is coupled to the working slide (16) by means of a wedge gear (126', 126") or an intermediate gearwheel.

2. The tool head of claim 1, **characterized in that** the wedge gear is formed by complementary, meshing slanted toothings (126', 126") which are disposed at the intermediate transmission element (120) and at the working slide (16).

3. The tool head of one of claim 1 or 2, **characterized in that** the working slide (16) is guided in a linear guide which is fixed to the base body, while the toothing (124) is formed by a tooth rack which meshes with the drive sprocket (74).

4. The tool head of one of claims 1 to 3, **characterized by** a compensation slide (18) which is disposed in the base body (10) and which is adapted to be displaced oppositely with respect to the working slide (16) by means of a tooth rack which meshes with the drive sprocket (74) and which is disposed at the side of the compensation slide.

5. The tool head of claim 4, **characterized in that** the compensation slide consists at least partially of a heavy metal.

6. The tool head of one of claims 1 to 5, **characterized in that** the working slide (16) comprises at least one hollow space (17, 19).

7. The tool head of claim 6, **characterized in that** at least one hollow space which is spaced with respect to the tool coupling fixture (14) in the direction of displacement is filled with a heavy metal (19).

8. The tool head of one of claims 4 to 7, **characterized in that** the compensation slide (18) carries a removable or exchangeable mass element (21), the mass of which is preferably adapted to be changed by removal of material.

9. The tool head of one of claims 1 to 8, **characterized in that** the transmission means comprise a reducing gear mechanism (22) having input and output axes (84, 72) which are aligned to each other, wherein the reducing gear mechanism (22) is formed to be a harmonic drive transmission or a planetary transmission.

10. The tool head of claim 9, **characterized in that** the adjusting motor (24) and the reducing gear mechanism (22) are disposed such that they radially and axially interpenetrate each other at least partially.

11. The tool head of claim 10, **characterized in that** the adjusting motor (24) or the driven shaft (84) thereof comprises a central opening for accepting the reducing gear mechanism (22).

12. The tool head of claim 10, **characterized in that** the reducing gear mechanism (22) comprises a central opening for accepting the adjusting motor (24).

13. The tool head of one of claims 1 to 12, **characterized in that** the working slide (16) is guided in a preferably prismatic anti-friction guide (52, 54, 58) which is fixed in the base body and which is free from play, that the anti-friction guide is limitedly elastically deformable, and that a slideway (56) for the working slide (16) becoming active upon reaching the limit of elastic deformability is additionally provided.

14. The tool head of one of claims 4 to 13, **characterized in that** the compensation slide (18) is guided in an anti-friction guide (60) which is fixed in the base body.

15. The tool head of one of claims 1 to 14, **characterized by** a slide assembly (34) for accepting the working slide and possibly the the compensation slide, a drive assembly (36) for accepting the adjusting motor (24) and the transmission means (22), and a connecting assembly (38) comprising the tool shank, which are removably connected to each other at axial separation locations (30, 32).

16. The tool head of claim 15, **characterized in that** the slide assembly (34) comprises a measuring device (20) which is adapted to directly measure the displacement of the working slide (16) with respect to the base body (10).

17. The tool head of claim 16, **characterized in that** the slide assembly and/or the drive assembly comprise measuring and control electronics (106) which are connected to the measuring device (20) and serve to control the adjusting motor (24).

18. The tool head of one of claims 15 to 17, **characterized in that** the connecting assembly comprises an interface (26, 104) for an inductive power supply and data transmission.

19. The tool head of one of claims 1 to 18, **characterized in that** the adjusting motor (24) is disposed with its rotationally symmetric motor housing (95) in a recess (96) of the base body, which recess is concentric with respect to the base body axis, leaving free a gap space (98) which is adapted to be subjected to a coolant for cooling the motor.

20. The tool head of claim 19, **characterized in that** the part of the recess (96) which contains the gap space (98) is disposed in the connecting assembly (38).

21. The tool head of one of claims 18 to 20, **characterized in that** the power supply interface (26, 104) is disposed in a housing (104), the outer side of which housing is adapted to be subjected to a coolant by way of a gap space (108).

22. The tool head of one of claims 15 to 21, **characterized in that** the drive assembly (36) extends into an axially open recess (78) of the slide assembly (34) with an axially protruding bearing sleeve (76) for the output shaft (72).

23. The tool head of claim 22, **characterized in that** the bearing sleeve (76) extends into an elongated hole (80) of the compensation slide (18).

24. The tool head of one of claims 1 to 23, **characterized in that** the tooth rack (68) which is fixed to the working slide or the drive sprocket (74) is divided into two axially separated toothed parts which are adapted to be displaced or rotated with respect to each other and which are adapted to be rigidly coupled to each other.

25. The tool head of one of claims 1 to 24, **characterized in that** the working slide (16) comprises a radial bore (110) for the connection to a coolant conduit (112) in the base body, which bore communicates with the tool holding fixture (14) and is aligned parallel to the direction of displacement.

26. The tool head of claim 25, **characterized in that** the coolant conduit (112) in the base body comprises a pipe (114) which slidably and sealingly engages the radial bore (110).

27. The tool head of one of claims 15 to 26, **characterized in that** the slide assembly comprises a jacket tube (40) which is braced to the base body (10) by means of a cover part (42), such that it cannot be rotated or displaced.

28. The tool head of one of claims 15 to 27, **characterized in that** the base body (10) comprises an interface (116) for a galvanic power supply and data transmission, which interface is preferably located in the region of the slide assembly (34).

## Revendications

1. Tête d'outil conçue pour l'utilisation dans des machines-outils, comprenant un corps de base (10) ; un arbre d'outillage (28) saillant axialement au-delà du corps de base (10), et pouvant être accouplé à une broche de la machine ; au moins un coulisseau de travail (16) mobile pour l'essentiel transversalement par rapport à l'axe (12) du corps de base, et muni d'un logement d'outillage (14) dépassant frontalement et un servomoteur (24) logé dans le corps de base (10) et agissant sur le coulisseau de travail (16) dans la direction du déplacement, par l'intermédiaire de moyens de transmission (22), lesdits moyens de transmission présentant un arbre de sortie (72) pouvant tourner concentriquement à l'axe (12) du corps de base, et portant un pignon d'entraînement (74) engrenant dans une crémaillère(124) située côté coulisseau de travail, **caractérisée**
**par le fait que** la denture (124) située côté coulisseau de travail se trouve sur un élément (120) de transmission intermédiaire guidé linéairement dans le corps de base (10) et accouplé, à son tour, au coulisseau de travail (16) par l'intermédiaire d'un engrenage cunéiforme (126', 126'') ou d'une roue dentée intercalaire.

2. Tête d'outil selon la revendication 1, **caractérisée par le fait que** l'engrenage cunéiforme est constitué par des dentures obliques (126', 126'') pénétrant l'une dans l'autre, complémentaires l'une de l'autre, et situées sur l'élément (120) de transmission intermédiaire et sur le coulisseau de travail (16).

3. Tête d'outil selon la revendication 1 ou 2, **caractérisée par le fait que** le coulisseau de travail (16) est guidé dans un guide rectiligne assujetti au corps de base, tandis que la denture (t24) est formée d'une crémaillère ou d'une tige crantée engrenant dans le pignon d'entraînement (74).

4. Tête d'outil selon l'une des revendications 1 à 3, **caractérisée par** un coulisseau de compensation (18), disposé dans le corps de base (10), qui est déplaçable, en sens inverse au coulisseau de travail (16) par l'intermédiaire d'une crémaillère, solidaire du coulisseau de compensation et engrenant avec le pignon d'entraînement (74).

5. Tête d'outil selon la revendication 4 , **caractérisée par le fait que** le coulisseau de compensation consiste au moins partiellement en un métal lourd.

6. Tête d'outil selon l'une des revendications 1 à 5, **caractérisée par le fait que** le coulisseau de travail (16) présente au moins une cavité (17,19).

7. Tête d'outil selon la revendication 6, **caractérisée par le fait qu'**au moins une cavité, située à distance du logement d'outillage (14) dans la direction du déplacement, est comblée d'un métal lourd (19).

8. Tête d'outil selon l'une des revendications 4 à 7, **caractérisée par le fait que** le coulisseau de compensation (18) porte un contrepoids (21) amovible ou remplaçable, dont la masse peut être de préférence modifiée par enlèvement de matière.

9. Tête d'outil selon l'une des revendications 1 à 8, **caractérisée par le fait que** les moyens de transmission comportent un engrenage démultiplicateur (22) à axes d'entrée et de sortie coïncidant mutuellement, ledit engrenage démultiplicateur (22) étant réalisé sous la forme d'une transmission du type "Harmonic Drive" ou d'un engrenage planétaire.

10. Tête d'outil selon la revendication 9, **caractérisée par le fait que** le servomoteur (24) et l'engrenage démultiplicateur (22) sont, au moins en partie, imbriqués radialement et axialement l'un dans l'autre.

11. Tête d'outil selon la revendication 10, **caractérisée par le fait que** le servomoteur (24), ou l'arbre mené (84) de ce dernier, comporte une perforation centrale en vue de recevoir l'engrenage démultiplicateur (22).

12. Tête d'outil selon la revendication 10, **caractérisée par le fait que** l'engrenage démultiplicateur (22) présente une perforation centrale en vue de recevoir le servomoteur (24).

13. Tête d'outil selon l'une des revendications 1 à 12, **caractérisée par le fait que** le coulisseau de travail (16) est guidé dans un guide de roulement (52, 54, 58) préférentiellement prismatique, assujetti au corps de base et réglé avec absence de jeu ; **par le fait que** la déformabilité élastique dudit guide de roulement est limitée ; et **par le fait qu'**il est additionnellement prévu, pour le coulisseau de travail (16), une portée de glissement (56) entrant en action lorsque la limite de déformation élastique est atteinte.

14. Tête d'outil selon l'une des revendications 4 à 13, **caractérisée par le fait que** le coulisseau de compensation (18) est guidé dans un guide de roulement (60) assujetti au corps de base.

15. Tête d'outil selon l'une des revendications 1 à 14, **caractérisée par** un groupe structurel (34) affecté aux coulisseaux, conçu pour recevoir le coulisseau de travail et éventuellement le coulisseau de compensation ; par un groupe structurel d'entraînement (36) conçu pour recevoir le servomoteur (24) et les moyens de transmission (22) ; et par un groupe structurel de raccordement (38) présentant l'arbre d'outillage, lesdits groupes étant reliés amoviblement les uns aux autres dans des zones axiales de séparation (30, 32).

16. Tête d'outil selon la revendication 15, **caractérisée par le fait que** le groupe structurel (34) affecté aux coulisseaux renferme un dispositif mesureur (20) pour la mesure directe de la course de déplacement du coulisseau de travail (16) vis-à-vis du corps de base (10).

17. Tête d'outil selon la revendication 16, **caractérisée par le fait que** le groupe structurel affecté aux coulisseaux, et/ou le groupe structurel d'entraînement, renferme(nt) une électronique de mesure et de régulation (106) raccordée au dispositif mesureur (20), en vue de l'activation du servomoteur (24).

18. Tête d'outil selon l'une des revendications 15 à 17, **caractérisée par le fait que** le groupe structurel de raccordement (38) renferme un interface (26, 104) pour une alimentation en courant d'induction et une transmission de données.

19. Tête d'outil selon l'une des revendications 1 à 18, **caractérisée par le fait que** le servomoteur (24) est disposé, par son carter (95) à symétrie de révolution, dans un évidement (96) du corps de base concentrique à l'axe dudit corps de base, en réservant un espace interstitiel (98) pouvant être sollicité par un fluide de refroidissement, en vue du refroidissement dudit moteur.

20. Tête d'outil selon la revendication 19, **caractérisée par le fait que** la partie de l'évidement (96), qui renferme l'espace interstitiel (98), se trouve dans un groupe structurel de raccordement (38).

21. Tête d'outil selon l'une des revendications 18 à 20, **caractérisée par le fait que** l'interface (26, 104) d'alimentation en courant se trouve dans un boîtier (104) pouvant être sollicité par un fluide de refroidissement, de l'extérieur, par l'intermédiaire d'un espace interstitiel (108).

22. Tête d'outil selon l'une des revendications 15 à 21, **caractérisée par le fait que** le groupe structurel d'entraînement (36) pénètre, par une douille de portée (76) saillant axialement et affectée à l'arbre de sortie (72), dans un évidement (78) à ouverture axiale du groupe structurel (34) affecté aux coulisseaux.

23. Tête d'outil selon la revendication 22, **caractérisée par le fait que** la douille de portée (76) s'engage dans un trou oblong (80) du coulisseau de compensation (18).

24. Tête d'outil selon l'une des revendications 1 à 23, **caractérisée par le fait que** la crémaillère (68) assujettie au coulisseau de travail, ou le pignon d'entraînement (74), est scindé(e) en deux parties dentées séparées axialement, pouvant être reliées rigidement l'une à l'autre, et pouvant coulisser ou tourner l'une par rapport à l'autre.

25. Tête d'outil selon l'une des revendications 1 à 24, **caractérisée par le fait que** le coulisseau de travail (16) présente un alésage radial (110) communiquant avec le logement d'outillage (14), orienté parallèlement à la direction du déplacement, et destiné au raccordement à une conduite (112) à fluide de refroidissement assujettie au corps de base.

26. Tête d'outil selon la revendication 25, **caractérisée par le fait que** la conduite (112) à fluide de refroidissement, assujettie au corps de base, comporte un tube emboîtable (114) qui pénètre dans l'alésage radial (110) de manière glissante et étanche aux fluides.

27. Tête d'outil selon l'une des revendications 15 à 26, **caractérisée par le fait que** le groupe structurel affecté aux coulisseaux présente une tubulure enveloppante (40) bloquée sur le corps de base (10), avec verrouillage rotatif et coulissant, par l'intermédiaire d'une pièce de recouvrement (42).

28. Tête d'outil selon l'une des revendications 15 à 27, **caractérisée par le fait que** le corps de base (10) comporte, de préférence dans la région du groupe structurel (34) affecté aux coulisseaux, un interface (116) destiné à une alimentation en courant galvanique et à une transmission de données.
